Europäisches Patentamt

European Patent Office

Office européen des brevets

(19)

(11) Publication number : **0 494 131 A1**

## (12) EUROPEAN PATENT APPLICATION

(21) Application number : **92870001.2**

(22) Date of filing : **02.01.92**

(51) Int. Cl.$^5$ : **C08K 5/37,** C08K 5/09, C08L 21/00

(30) Priority : **04.01.91 EP 91870002**

(43) Date of publication of application :
**08.07.92 Bulletin 92/28**

(84) Designated Contracting States :
**AT BE CH DE ES FR GB IT LI LU NL SE**

(71) Applicant : **MONSANTO EUROPE S.A.**
**Avenue de Tervuren 270-272 Letter Box 1**
**B-1150 Brussels (BE)**

(72) Inventor : **Lynch, Eric Royle**
**Rue W. Degouve de Nuncques 16**
**B-1040 Brussels (BE)**
Inventor : **Devaux, Albert Firmin Léon Ghislain**
**Rue des Hayeffes 6**
**B-5870 Mont Saint Guibert (BE)**

(74) Representative : **Ernst, Hubert et al**
**Monsanto Services International S.A., Patent**
**Department, Avenue de Tervuren 270-272,**
**Letter Box No. 21**
**B-1150 Brussels (BE)**

(54) **Rubber compositions providing improved rubber-vulcanisate properties.**

(57)    The invention relates to rubber compositions having improved vulcanisate properties, particularly hardness, modulus and modulus stabilisation. These benefits can be achieved from the addition to the unvulcanised rubber of a narrow and specifically defined class of agents for modifying rubber properties. Such agents are alkanoic acids or salts which include an aromatic moiety.

EP 0 494 131 A1

This invention relates to rubber compositions having improved vulcanisate properties particularly hardness and modulus stabilisation. Rubber is typically vulcanised by heating it in a mixture with sulphur and other ingredients, and if extra hardness or modulus are required there is often included a resin or components of a resin which act as hardening agents during the vulcanising stage.

In the context of this invention, certain carboxylic acids containing cyclic-moieties were found to be well adapted for providing rubber having desirable rubber vulcanisate properties.

The desirability of making available rubber vulcanisates having improved hardness and/or improved modulus stability properties is known, particularly for use in the bead-section of tires. Currently, sufficient hardness is obtained from the use during vulcanisation, of various resins such as phenolic resins based on Novolaks or resorcinol together with a methylene donor. Alkyloxyalkanoic acids, which are known from European application 90870234.3, filed 28.11.1990, have been suggested for modifying rubber properties and facilitating rubber processing. Similarly alkylthioalkanoic acids are known from European application 90870084. Such thio-acids can act as viscosity modifying additives for use in rubber technology. It is also known that resin hardeners do not generally provide stabilisation of the modulus at low elongation (e.g. 5%) after (mechanical) flexing of the rubbery vulcanisate.

We have now found that certain types of alkanoic acids or their salts as defined below, and hereinafter referred to as agents useful for modifying rubber properties ("RMA"), provide improved hardness and modulus stabilisation and are superior to prior art means, inclusive of various types of resins, in that they improve other physical properties. For example, the resilience and compression set properties of a vulcanisate are improved by the use of an RMA as compared to these properties obtained from the use of a resin in a comparable rubber composition.

The present invention provides a rubber composition comprising an unvulcanised rubber polymer and, as an agent for modifying rubber properties (RMA), a compound having the formula

$$R^1\text{-Cycl-}(CR^2R^3)_n\text{-X-}(CR^4R^5)_m\text{-CO}_2R^6$$

wherein $R^1$ represents hydrogen, an alkyl an alkenyl or an alkoxy group, having from 1 to 20 carbon atoms in the alkylchain, Cycl stands for a 6-member aromatic ring or two of such rings fused together, X represents sulphur or oxygen, each of $R^2$ and $R^3$ independently represents hydrogen or an alkyl group having from 1 to 22 carbon atoms, $R^6$ represents hydrogen, a metallic or other cationic group, each of $R^4$ and $R^5$ represents independently hydrogen or an alkyl group having from 1 to 6 carbon atoms, n has a value of from 0 to 4, m has a value of 1 to 4.

In another aspect, the invention provides a method of improving the processability of rubber and modifying certain properties of the vulcanised rubber, which comprises incorporating in the rubber a cyclic compound as defined above.

In the above formula, Cycl can broadly represent a 6-member aromatic ring, whereby two of such rings can be fused.

The ring structures suitable herein can include benzene, and bicyclic rings formed by fusion of two or more of the individual rings, for example naphthalene.

In the above formula of the RMA, $R^1$ can in principle be any straight or branched chain alkyl or alkenyl or an alkoxy group having from 1 to 20 carbon atoms, for example straight-chain butyl, pentyl, hexyl, heptyl, octyl, octenyl, nonyl, decyl, dodecyl, dodecenyl, tetradecyl, hexadecyl, or octadecyl, or any of the branched-chain isomers thereof.

Where $R^6$ represents a metallic or other cationic group, this can be for instance an alkali metal ion, for example sodium. $R^6$ can alternatively represent the equivalent of a multivalent metal, for instance magnesium, calcium, barium, zinc, nickel, cobalt, or aluminium. Of these, zinc is the preferred multivalent metal.

A cationic group $R^6$ can also be ammonium or substituted ammonium as for example a quaternary ammonium group $R_4N$ wherein one or more of the R-groups are represented by alkyl, cycloalkyl, benzyl or phenyl whereby preferably not more than one phenyl is attached to the nitrogen atom. Alternatively the nitrogen of the substituted ammonium group can be part of a heterocyclic ring system, for example one derived from 2,2,4-trimethyl-1,2-dihydroquinoline. Cationic groups $R^6$ may also be derived from other nitrogenous bases, for example guanidine or diphenylguanidine.

$R^2$, $R^3$, $R^4$ or $R^5$ preferably represents an alkyl group, containing from 1 to 6 carbon atoms, especially a methyl or ethyl group. Preferably at least one of $R^3$ and $R^4$ attached to the carbon atom in each group $CR^3R^4$ is hydrogen. Preferred compounds are those in which n has a value of from 0 to 4, and m has a value from 1 to 4. In one preferred embodiment, $R^1$ can be represented by a straight chain alkyl group of from 10 to 20 carbon atoms, $R^2$, $R^3$, $R^4$ and $R^5$ are preferably hydrogen or $C_1$ - $C_6$ alkyl groups, n has a value of 0, 1, 2, or 3, m has a value of 1, 2, or 3, Cycl is derived from $C_6H_6$, and X is oxygen or sulphur 1. In another preferred embodiment, $R^1$ can be hydrogen or an alkyl group having from 1 to 8 carbon atoms, $R^1$, $R^2$, $R^3$, $R^4$, $R^5$, X, n and m, are as defined for the other preferred embodiments herein. Representative examples of suitable compounds are phenoxyacetic acid, (phenylthio)acetic acid, 2- and 3-phenoxypropionic acid, 2- and 3-(phenylthio)propionic acid, (benzylthio)acetic acid, 2- and 3-(benzylthio)propionic acid, or a salt thereof.

Several methods, well known in the art, are available for the preparation of alkanoic acids containing cyclic moieties useful in accordance with the invention.

The agents for modifying rubber properties described above are especially effective in compositions in which the rubber is cis-polyisoprene, either natural or synthetic, but they are also useful with other rubbers, including for example poly-1,3-butadiene, copolymers of 1,3-butadiene with other monomers, for example styrene, acrylonitrile, isobutylene and methyl methacrylate, ethylene-propylene-diene terpolymers (EPDM), maleic acid-grafted EPDM, and halogen-containing rubbers such as chlorobutyl, bromobutyl and chloroprene rubbers. In other instances, the rubber polymer in a rubber composition of the invention can be a blend of two or more of the rubbers exemplified above, for example a blend of natural rubber and styrene-butadiene rubber. Particularly preferred is natural rubber, styrene-butadiene rubber or blends thereof.

The amount of RMA in a composition of the invention will vary depending on the nature of the rubber polymer, the quantitative and qualitative unvulcanised and vulcanised rubber properties required, and whether or not other additives are included. Usually, however, the amount of RMA will be within the range from 0.2 to 10 parts by weight of rubber, and more especially within the range from 0.5 to 5 parts by weight per 100 parts by weight of rubber.

The RMA's can as described in more detail hereinbefore, be used to facilitate the processability of raw rubber polymer and to procure improved vulcanisate properties. They are particularly useful in fully compounded rubber stocks containing a reinforcing agent and/or a filler, a vulcanising agent, and, an existing process aid, such as a processing oil or mixtures of the like processing aids, and an accelerator. Conventionally used reinforcing fillers include carbon black, for example a carbon black of the N300 series such as N347 or N326, which typically is used in an amount of from 30 to 90 parts by weight per 100 parts by weight of rubber. Other additives include, for example, zinc oxide, which may be used in an amount of, for instance, from 2 to 10 parts by weight per 100 parts by weight of rubber; stearic acid at a level of, for instance, from 0.5 to 2 parts by weight per 100 parts by weight of rubber although a feature of the present invention is that in compositions containing RMA's which are alkanoic acids having cyclic moieties or salts thereof, the amount of stearic acid can be significantly reduced (or it may not be needed at all), antidegradants, for example N-alkyl-N'-phenyl-p-phenylenediamines, and antioxidants, for example polymers of 2,2,4-trimethyl-1,2-dihydroquinoline. Other reinforcing agents and/or fillers may be used, for example silica, and the rubber stocks may also contain metal oxide activators other than zinc oxide, pre-vulcanisation inhibitors, for instance N-cyclohexylthiophthalimide, and post-vulcanisation stabilisers and rubber-metal bonding promoters, for example the thiosulphate derivatives described in EP-B-0 070 143 and EP-B-109 955.

The RMA can be incorporated into the rubber, together with additives, except the vulcanising agent and the vulcanisation accelerator, during a first stage mixing, using, for example, an internal mixer or a mill. In an alternative procedure, the RMA can be incorporated along with the vulcanising agent and accelerator during a second stage mixing. If sulphur is used as the vulcanising agent, the amount is typically in the range from 0.3 to 6 parts by weight per 100 parts by weight of rubber.

Accelerators which can be used include the benzothiazole-2-sulphenamides, for instance N-isopropyl-benzothiazole-2-sulphenamide, N-tert-butyl-benzothiazole-2-sulphenamide, N-cyclobenzothiazole-2-sulphenamide, N,N-dicyclohexylbenzothiazole-2-sulphenamide and 2-(morpholinothio)benzothiazole. In the compositions of the invention, these accelerators are typically used in amounts of from 0.1 to 3 parts by weight per 100 parts by weight of rubber depending on the nature of the rubber, the amount of sulphur, and the properties required in the cured rubber. Other curing systems using sulphur donors, for example dimorpholine disulphide, can be used.

As indicated above, the RMA's used in this invention can be incorporated into the rubber by conventional mixing procedures.

Most of the RMA's are in a state such that no special precautions are necessary for obtaining good dispersions. In the processing of natural rubber it is customary to subject the raw rubber to a mastication before the introduction of any additives. By means of the RMA's herein, however, particular benefits can be obtained inclusive of accelerated mastication if the RMA is added alone during the primary mastication stage. If necessary, higher melting solids can be ground to a fine powder, preferably 70 micrometres particle size or less, to promote adequate dispersion. In certain instances, it is convenient to add a solid RMA as a predispersion of particulate material in a rubber-compatible hydrocarbon oil or polymer, for example EPDM rubber.

The invention is illustrated by the following specific embodiments.

For the evaluation of the RMA's of the invention, masterbatches I, II and III, of the following composition were employed:

|  | Parts by weight | | |
|---|---|---|---|
|  | I | II | III |
| Natural rubber SMR 10 | 100 | 100 | 100 |
| Carbon Black N 375 | 50 | - | - |
| Carbon Black N 347 | - | 50 | - |
| Carbon Black N 330 | - | - | 80 |
| Zinc Oxide | 5 | 5 | 5 |
| Stearic Acid | 2 | 2 | 2 |
| Tackifier (1) | - | - | 5 |
| Antidegradant (2) | 2 | 2 | 2 |
| Process Oil (3) | - | - | 10 |
| Sulphur | 2.5 | 2.5 | 3.5 |
| Accelerator (4) | 0.6 | 0.6 | 0.7 |

(1)  Escorez® 1102 B

(2)  Santoflex® 13

(3)  Dutrex® 729

(4)  Santocure®

The natural rubber for masterbatches I and III was premasticated, before the addition of other ingredients, to a viscosity of about 65 Mooney Units (ML(1 + 4) at 100°C); for masterbatch II, the natural rubber was premasticated to a viscosity of 50 Mooney Units (ML(1 + 4) at 100°C).

For mixing, a laboratory scale BR Banbury internal mixer was used. In preparing masterbatch I, the ingredients were incorporated in accordance with the following schedule at the intervals shown starting with the premasticated rubber at time zero.

| Time (min.) | Added ingredients |
|---|---|
| 0 | Rubber |
| 1 | Half of N375 and zinc oxide |
| 2.5 | Half of N375 + other ingredients |
| 4 | Sweep |
| 5 | Dump (ca. 145°C) |

The RMA, the sulphur and the accelerator were added later on a two roll mill at 70°C.

To the premasticated rubber, the ingredients of masterbatch II were added by a single step mixing procedure in accordance with the following schedule at intervals determined by the integral value of power consumption of the mixer. The premastic ated rubber was added to the mixer having a temperature of 40°C.

Power integral

| Value (kwh) | Operation |
|---|---|
| 0 | Add half of carbon black with zinc oxide to rubber |
| 0.125 | Add remaining carbon black, antidegradant, stearic acid, processing oil and (in test batches), RMA or prior art additive resorcinol. |
| 0.350 | Sweep, add sulphur and accelerator, and other additives. |
| 0.400 | Dump (ca. 130°C). |

The premasticated rubber and the ingredients of masterbatch III were combined by a two-step mixture procedure in accordance with the following schedule.

| Time | Ingredient addition |
|---|---|
| 0 | Rubber, half of N 330 and ZnO |
| 1 | Half of N330 and other ingredients, except sulphur, accelerator and RMA |
| 3 | Sweep |
| 4.5 | Dump |

The RMA, the sulphur and the accelerator were subsequently admixed with masterbatch III (which had been prepared separately) by means of a laboratory scale BR Banbury mixer.

Samples were vulcanised at 141°C for a time which corresponds to t'$_{(90)}$ by Rheometer (ISO 34H - 1977 E) for modulus and resilience and an additional 5 minutes for hardness and compression set. The tests were performed in accordance with standard procedures (ISO 37, ISO 4662, ISO 815 and ISO 48, ISO 1400, ISO 1818).

Table 1 below gives results obtained with various stocks based on masterbatch I. The figures in parentheses (Re1) are percentages relative to the Control. The RMA's used are indicated by numbers in the left hand columns of the Table as follows and are used at a level of 3 parts per hundred (phr.) The resin components (A) and (B) were used at levels of 2.5 phr and 2 phr respectively, with (B) included in the other ingredients of the BR-Branbury mixing cycle but (A) added on the mill along with the sulfur and accelerator.

## EXAMPLE 1

1. None (Control)
2. 3-(Benzylthio)propionic acid
3. Resin components (A) and (B)
   (A) Hexamethoxymethylmelamine (HMMM) trade name Resimene® 3521 (2.5 phr)
   (B) Resorcinol 80% on inert filler 20%, trade-name Rhenogran® 80 (2.5 phr)

Table 1

| | Mooney ML(1+4) 100°C Units (Rel) | | Hardness IRHD (Rel) | | Modulus at 100% Extension MPa (Rel) | | Compression set % (Rel) | | Rebound Resilience % (Rel) | |
|---|---|---|---|---|---|---|---|---|---|---|
| 1 | 44.9 | (100) | 66 | (100) | 3.0 | (100) | 42 | (100) | 52.9 | (100) |
| 2 | 43.2 | ( 96) | 75 | (114) | 3.7 | (123) | 31 | ( 74) | 52.0 | ( 98) |
| 3 | 47.2 | (105) | 76 | (115) | 4.0 | (133) | 37 | ( 88) | 47.9 | ( 91) |

The above results permit a comparison of a stock containing an RMA of the invention with a blank (control) and a stock (No.3) containing the resin based on HMMM and resorcinol.

Stock No. 2 which contains the RMA shows substantial increases in hardness and modules relative to the control stock No. 1, whilst achieving improvements in compression set and rebound resilience relative to stock No. 3 which contains the resin-based additive from the prior act.

EXAMPLE 2

Table 2 below gives results obtained with various stocks based on masterbatch No. II. The figures (Rel) in parentheses are relative to the blank (control). The process oil and the RMA's were at a level of 3 phr, the resin as in Table 1, with the numbers in the left hand column of Table 2 corresponding to the additives as follows:
1. None (Control).
2. Process oil (Dutrex® 729)
3. (Benzylthio)acetic acid
4. Resin components (A) and (B)
(A) and (B) are as defined and mixed as described hereinbefore.

Table 2

| | Mooney ML(1+4) 100°C Units (Rel) | | Hardness IRHD (Rel) | | Modulus at 100% Extension MPa (Rel) | | Compression set % (Rel) | | Rebound Resilience % (Rel) | |
|---|---|---|---|---|---|---|---|---|---|---|
| 1 | 79.1 | (100) | 74 | (100) | 3.2 | (100) | 31 | (100) | 62.9 | (100) |
| 2 | 70.9 | ( 90) | 71 | ( 96) | 2.7 | ( 84) | 34 | (110) | 61.2 | ( 97) |
| 3 | 71.8 | ( 91) | 80 | (108) | 4.2 | (131) | 22 | ( 71) | 59.1 | ( 94) |
| 4 | 71.9 | ( 91) | 80 | (108) | - | - | 32 | (103) | 57.1 | ( 91) |

The results of Table 2 permit a comparison of stocks containing an RMA of the invention with a blank (control), and stocks containing either prior art process oil or the resin based on HMMM and resorcinol.

These results show that, relative to the control, the RMA ot the invention provides increased hardness and modulus, and improved rebound resilience, whereas process oil reduces the values of these properties. Further, relative to the resin additives the RMA gives equal or superior hardness whilst providing better compression set and rebound resilience.

EXAMPLE 3

Table 3 shows the results of evaluating RMA's of the invention in masterbatch III,
1. None (Control)
2. Resin components (A) and (B)
3. Resin components (C) and (D)
4. 3-(Phenylthio)-propionic acid
5. 3-(Benzylthio)propionic acid
Resin components (A) and (B) were used at the same levels as described in Example I. The resin compo-

6

nent (C) was the Novolak resin, trade name Cellobond JIII4 W used at a level of 5 phr; and resin component (D) was hexamethylene tetramine (HMT) used at a level of 0.4 phr. The RMA's of the invention were used at a level of 3 phr.

## Table 3

|   | Mooney ML(1+4) 100°C | | Hardness | | Modulus at 100% Extension | | Compression set | | Rebound Resilience | |
|---|---|---|---|---|---|---|---|---|---|---|
|   | Units | (Rel) | IRHD | (Rel) | MPa | (Rel) | % | (Rel) | % | (Rel) |
| 1 | 70.4 | (100) | 79 | (100) | 4.5 | (100) | 32 | (100) | 44.3 | (100) |
| 2 | 71.8 | (102) | 90 | (114) | 5.9 | (131) | 33 | (103) | 39.9 | ( 90) |
| 3 | 74.8 | (106) | 88 | (111) | 5.3 | (118) | 34 | (106) | 41.5 | ( 94) |
| 4 | 61.3 | ( 87) | 87 | (110) | 6.0 | (133) | 25 | ( 78) | 42.6 | ( 96) |
| 5 | 63.7 | ( 90) | 86 | (109) | 5.6 | (124) | 24 | ( 75) | 42.6 | ( 96) |

The experimental data confirm the consistent performance benefits derived from the use of the RMA's as claimed, here based on a masterbatch which contains a relatively high loading of carbon black. The Mooney viscosity (before cure) is reduced, indicating a likely advantage for processability, by use of the RMA's. The vulcanisates from the stocks which contain the RMA's have high hardness and modulus values whilst at the same time providing better compression set and rebound resilience than provided by the stocks Nos. 2 and 3 which contain the resin-based hardeners.

## EXAMPLE 4

In Table 4 the numbers in the left hand column refer to the resin based hardeners of the prior art and to RMA's of the invention This table shows performance parameters of the unvulcanised and vulcanised rubber compositions of the invention for selected RMA's. The rubber compound is masterbatch III but with 1 phr antidegradant. The mixing was as in Example 3, except that the RMA's or the resins were added together with sulphur and the accelerator on the two roll mill at 70°C. The RMA numbering is as follows:
1. None (Control)
2. Resin components (A) and (B)
3. Resin components (C) and (D)
4. Phenoxyacetic acid
5. 3-Phenoxypropionic acid
6. DL-2-phenoxypropionic acid
7. DL-2-phenoxybutyric acid
8. 2-Naphthoxyacetic acid

Resin components (A) and (B), (C) and (D) were used at the levels described in Example 3; the RMA's of the invention were used at a level of 3 phr.

## Table 4

|   | Mooney ML(1+4) 100°C | | Hardness | | Modulus at 100% Extension | | Compression set | | Rebound Resilience | |
|---|---|---|---|---|---|---|---|---|---|---|
|   | Units | (Rel) | IRHD | (Rel) | MPa | (Rel) | % | (Rel) | % | (Rel) |
| 1 | 62.9 | (100) | 73 | (100) | 3.5 | (100) | 42 | (100) | 42.6 | (100) |
| 2 | 62.0 | ( 99) | 85 | (116) | 5.6 | (160) | 37 | ( 88) | 38.4 | ( 90) |
| 3 | 76.5 | (122) | 85 | (116) | 5.4 | (154) | 45 | (107) | 38.1 | ( 89) |
| 4 | 64.4 | (102) | 84 | (115) | 6.9 | (197) | 38 | ( 90) | 39.2 | ( 92) |
| 5 | - | | 84 | (115) | 7.0 | (200) | 35 | ( 83) | 40.3 | ( 95) |
| 6 | 59.2 | ( 94) | 84 | (115) | 6.5 | (186) | 31 | ( 74) | 39.9 | ( 94) |
| 7 | 57.3 | ( 91) | 82 | (112) | 5.9 | (168) | 30 | ( 71) | 39.2 | ( 92) |
| 8 | 70.6 | (112) | 86 | (116) | 5.6 | (160) | 27 | ( 64) | 39.2 | ( 92) |

EP 0 494 131 A1

The data in Table 4 allow a comparison to be made of RMA's of the invention with either the blank (1) or resin based hardeners of the prior art (2 and 3). Against the control, all the stocks which contain the inventive RMA's provide substantial increases in hardness and modulus, whilst rebound resilience and compression set values are superior to those obtained with the prior art materials. Additionally, the Mooney viscosity (ML(1+4)100°C) an indicator of easier processing of the uncured stock, is reduced by the RMA's.

EXAMPLE 5

The following RMA's of the invention were used at a level of 3 phr and the components (C) and (D) of the prior art resin-based hardener, used at the levels of Example 3, were compounded into Masterbatch III as hereinbefore described:
1. Resin components (C) + (D)
2. Sodium salt of phenoxyacetic acid
3. Zinc salt of phenoxyacetic acid
4. Zinc salt of benzyloxyacetic acid

## Table 5

| | Mooney ML(1+4) 100°C | | Modulus at 100% Extension | | Compression set | |
|---|---|---|---|---|---|---|
| | Units | (Rel) | MPa | (Rel) | % | (Rel) |
| 1. | 62.6 | (100) | 5.4 | (100) | 46 | (100) |
| 2. | 59.6 | ( 95) | 5.9 | (109) | 43 | ( 93) |
| 3. | 56.7 | ( 91) | 6.7 | (124) | 39 | ( 85) |
| 4. | 56.0 | ( 89) | 7.3 | (135) | 41 | ( 89) |

(1) Is represented by a composition containing a resin-based hardener of the prior art, compared to which there are important increases in modulus, and improvements in compression set, as well as desirable decreases in viscosity of the uncured stocks, for those compositions which contain RMA's of the invention.

EXAMPLE 6

The following RMA's of the invention were used at a level of 3 phr, whilst for comparison the components (C) and (D) of the prior art resin-based hardener were used at the levels of Example 3, and were compounded into Masterbatch III as hereinbefore described.
1. Resin components (C) and (D)
2. (1-Naphthoxy)acetic acid
3. (2-Naphthylthio)acetic acid
4. (1-Naphthylthio)acetic acid

8

|    | Hardness IRHD (Rel) | Modulus at 100% Extension MPa (Rel) | Compression set % (Rel) |
|----|---------------------|-------------------------------------|-------------------------|
| 1. | 81 (100) | 5.2 (100) | 53 (100) |
| 2. | 82 (101) | 5.7 (110) | 43 (80) |
| 3. | 83 (102) | 5.8 (111) | 44 (82) |
| 4. | 83 (102) | 5.9 (113) | 46 (86) |

As in Example 5, (1) is represented by a composition containing a resin-based hardener of the prior art, compared to which there are increases in hardness and modulus with improvements in compression set for the compositions which contain RMA's of the invention.

## Claims

1. A rubber composition comprising an unvulcanised rubber polymer and, as an agent for modifying rubber properties (RMA), a compound having the formula
$$R^1\text{-Cycl-}(CR^2R^3)_n\text{-}X\text{-}(CR^4R^5)_m\text{-}CO_2R^6$$
wherein $R^1$ represents hydrogen, an alkyl, an alkenyl or an alkoxy group, having from 1 to 20 carbon atoms in the alkylchain, Cycl stands for a 6-member aromatic ring or two of such rings fused together, X represents sulphur or oxygen, each of $R^2$ and $R^3$ independently represents hydrogen or an alkyl group having from 1 to 22 carbon atoms, $R^6$ represents hydrogen, a metallic or other cationic group, each of $R^4$ and $R^5$ represents independently hydrogen or an alkyl group having from 1 to 6 carbon atoms, n has a value of from 0 to 4, m has a value of 1 to 4.

2. The composition in accordance with Claim 1 wherein $R^1$ is an alkyl group having from 10 to 20 carbon atoms, $R^2$, $R^3$, $R^4$ and $R^5$ can be hydrogen or alkyl having from 1 to 6 carbon atoms.

3. The composition in accordance with Claim 1 wherein $R^1$ is an alkyl group having from 1 to 8 carbon atoms.

4. The composition in accordance with Claim 1 wherein $R^1$ is hydrogen or an alkyl or an alkoxy group having from 1 to 6 carbon atoms.

5. The composition in accordance with Claim 2 wherein $R^2$, $R^3$, $R^4$, and $R^5$ are hydrogen or alkyl groups having 1 or 2 carbon atoms.

6. The composition in accordance with Claims 1 and 5 wherein the RMA is selected from the group of, (phenylthio) acetic acid, 2- and 3-phenoxypropionic acid, 2- and 3-(phenylthio) proprionic acid, (benzylthio)acetic acid, 2- and 3-(benzylthio) propionic acid, or a salt thereof.

7. The composition in accordance with Claim 1 wherein the RMA is 2-naphthoxyacetic acid or a salt thereof.

8. The composition in accordance with Claim 1 wherein the RMA is phenoxyacetic acid or a salt thereof.

9. The composition in accordance with Claims 1 through 8 wherein the amount of the RMA is from 0.2 to 10 parts by weight per 100 parts of rubber.

10. The composition in accordance with any of Claims 1 through 9 wherein the rubber polymer is natural or synthetic cis-poly-isoprene, styrene-butadiene, poly-1,3-butadiene, EPDM, maleic acid-grafted EPDM, butyl rubber or nitrile rubber, or blends of such rubbers.

11. The composition in accordance with any of Claims 1 to 9 which in addition contains a curing system using sulfur and/or a sulfur donor and an accelerator.

European Patent
Office

**EUROPEAN SEARCH REPORT**

Application Number

EP    92 87 0001

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 048 777 (MONSANTO)<br>* page 2, line 6 - line 15 *<br>* page 2, line 28 *<br>* page 9; table 3 *<br>--- | 1,4,8-11 | C08K5/37<br>C08K5/09<br>C08L21/00 |
| A | US-A-4 125 515 (J.A. KUCZKOWSKI)<br>* abstract *<br>* column 1, line 28 - line 67 *<br>--- | 1 | |
| D,A | EP-A-0 401 193 (MONSANTO)<br>* abstract *<br>----- | 1 | |
| | | | TECHNICAL FIELDS SEARCHED (Int. Cl.5 ) |
| | | | C08K |

The present search report has been drawn up for all claims

| Place of search | Date of completion of the search | Examiner |
|---|---|---|
| THE HAGUE | 26 MARCH 1992 | METTLER R.M. |